Europäisches Patentamt

European Patent Office

Office européen des brevets

(19)

(11) Veröffentlichungsnummer: **0 148 966**
**B2**

(12) **NEUE EUROPÄISCHE PATENTSCHRIFT**

(45) Veröffentlichungstag der neuen Patentschrift:
16.01.91

(51) Int. Cl.⁵: **B 29 B 7/56**

(21) Anmeldenummer: **84100370.0**

(22) Anmeldetag: **16.01.84**

(54) **Kontinuierliches Misch- und Scherwalzwerk.**

(43) Veröffentlichungstag der Anmeldung:
24.07.85 Patentblatt 85/30

(45) Bekanntmachung des Hinweises auf die
Patenterteilung:
23.12.87 Patenblatt 87/52

(45) Bekanntmachung des Hinweises auf die
Entscheidung u̇ber den Einspruch:
16.01.91 Patentblatt 91/03

(84) Benannte Vertragsstaaten:
AT BE CH DE FR GB IT LI LU NL SE

(56) Entgegenhaltungen:
DE-A-1 679 880
FR-A- 930 314
FR-A-2 250 620
US-A-1 390 599
US-A-1 936 490
US-A-3 548 742

(73) Patentinhaber: **Albers, August, Dr.-Ing.**
**Grissheimer Weg 7**
**D-7843 Heitersheim (DE)**

(72) Erfinder: **Albers, August, Dr.-Ing.**
**Grissheimer Weg 7**
**D-7843 Heitersheim (DE)**
Erfinder: **Krüger, Ernst, Dipl.-Ing.**
**Ryksweg 87**
**NL-6295 AM Lemiers (NL)**

(74) Vertreter: **Thoma, Friedrich, Dipl.-Ing.(FH)**
**Buchenstrasse 20**
**D-7612 Haslach i.K. (DE)**

EP 0 148 966 B2

Courier Press, Leamington Spa, England.

**Beschreibung**

Die Erfindung betrifft ein Misch- und Scherwalzwerk gemäß den Oberbegriff des Anspruchs 1 zum kontinuierlichen Transportieren, Mischen, Homogenisieren und Plastifizieren von Gummi-, Kunststoff- und anderem plastifizierbaren Material (DE—A—1679880).

Bekannte Walzwerke mit glatten Oberflächen mischen und plastifizieren das Material im Walzspalt nur schlecht und ungleichmäßig. Wenn sich zufällig zwischen wärmeren Materialpartien und der örtlichen Walzenoberfläche eine größere Haftung ausbildet, wird diese Partie in den Spalt eingezogen. Örtlich entstehen dabei sehr hohe Material-Temperaturen, unmittelbar axial nebenan aber verweilen vor dem Walzenspalt kältere Materialpartien unkontrollierbar lange Zeit.

Es ist in der US-Patent-Schrift Nr. 3548 742 ein Misch- und Scherwalzwerk zum kontinuierlichen Aufbereiten plastischer Massen mit Hilfe von gegenläufigen Walzen beschrieben worden. Die Walzen sind dabei mit ineinandergreifenden gewindeartigen Oberflächenprofilierungen ausgerüstet, welche das Material dünnschichtig zu den Stirnseiten transportieren. Die Aufgabe, unförmige, grobe Materialstücke sicher in den Walzenspalt einzuziehen und zu zerteilen, ist jedoch nicht gelöst.

Ausgehend vom Stand der Technik nach DE—A—1679880 setzt nun die erfinderische Aufgabe ein, die darin besteht, ein kontrolliert sicheres und gleichmäßiges Einziehen des Materials, auch von unförmigen und groben Materialstücken in den Walzenspalt zu erreichen und durch einen beeinflußaren Materialtransport in axialer Richtung ein sehr kurzes Verweilzeitspektrum mit kontrolliert fortschreitendem Plastifizierungsgrad zur erhalten.

Die erfindungsgemäße Aufgabe wird bei einem gattungsgemäßen Misch- und Scherwalzwerk dadurch gelöst, daß beide Walzen unterschiedlich temperiert sind, daß die Walzenlänge mehr als das Vierfache des Walzendurchmessers beträgt, daß die Nuten in einem spitzen Winkel kleiner als 45⁰ zu den Walzenachsen angeordnet sind, daß die Zahl der Nuten auf dem Walzenumfang und die Tiefe der Nuten entlang den Walzenachsen von der Lagerseite mit der Materialaufgabe bis zur Walzenmitte zunimmt und von dort bis sur Lagerseite mit der Materialabnahme wieder abnimmt und daß mehrere Materialaufgabe vorrichtungen für verschiedene Materialtypen und Zugabestoffe in axialer Richtung entlang dem Walzenspalt angeordnet sind.

Diese erfindungsgemäß scharfkantig ausgebildeten Nuten schneiden sich in das vor dem Spalt befindliche Material, zerteilen es wie zwei schrägverzahnte gegenläufige Walzenfräser in Stücke und reißen diese — unabhängig von zufälliger Walzenoberflächenhaftung — zwangsläufig mit in den Walzenspalt.

Dort im Walzenspalt erfährt die Mittelschicht des Materials eine sehr intensive zweiachsige Scherung. Die unterschiedlichen Oberflächengeschwindigkeiten der Walzen mit dem in den Walzennuten der beiden Walzen verklammerten Material scheren in dem Spalt zwangsweise Kunststoffmaterial gegen Kunststoffmaterial gleichzeitig in radialer und achsialer Richtung.

Die erfindungsgemäße Profilierung der Walzenoberflächen mit scharfkantigen Nuten im Wechsel mit Abschnitten glatter Walzenoberfläche am Walzenumfang bewirkt, daß die radiale Scherspaltweite im engsten Walzenspalt fortlaufend wechselt. Durch die unterschiedlichen Oberflächengeschwindigkeiten der beiden Walzen schwankt die Intensität der Scherung in großen Amplituden durch die Schichtdickenänderung.

Wenn zufällig im Walzenspalt von beiden Walzen die glatten Walzensegmentflächen zusammentreffen, bildet sich z.B. eine Schichtdicke von 1 mm. Treffen dort aber ein glattes Walzensegment der einen Walze und eine Nuttiefe von z.B. 1,5 mm der Gegenwalze aufeinander, entsteht örtlich eine Schichtdicke von 1—plus 1,5 mm, gleich 2,5 mm oder beim Zusammentreffen der beidseitigen Nuten 1,5 plus 1 plus 1,5, insgesamt also 4,0 mm Schichtdicke im Scherspalt.

In erprobten, erfindungsgemäßen Walzwerken wurden die Nuten 0,5 bis 10 mm tief; vorzugsweise 1 bis 5 mm tief und 1—50 mm; vorzugsweise 1—10 mm breit, — aber immer zur Walzenoberfläche hin scharfkantig ausgebildet. Der Nutgrund wird halbrund bis rechteckig ausgeführt. Während der Fachmann im Nutgrund ein Festhaften oder Festbrennen des Materials erwartet, tritt an der erfindungsgemäß genuteten Walzenoberfläche genau das Gegenteil ein. Der Nutgrund spült sich durch starke Materialwirbel sauber. Es sammelt sich dort ein Gas/Luftpolster an, welches sich durch das hochwirksame Entgasen und Entlüften unter dem Materialwirbel ausbildet. Dieses Luftpolster hebt das Walzfell sogar geringfügig aus dem Nutgrund ab und entspannt sich beim Betrieb des Walzwerkes durch ein lautes Knackgeräusch. Die erfindungsgemäße Walzenprofilierung (35), (36) mit Nuten bewirkt ein sicheres Einziehen des Materials in den Spalt, auch inhomogenes Material wird eingezogen und gleichzeitig in dem Nutspalt auch bei höheren Temperaturen großvolumig gemischt, sodaß es dort weder zu Verbrennungen, noch zu einem Festbacken des Materials an den Walzenoberflächen kommt.

Darüberhinaus erweist es sich als ein vorteilhaftes Verfahren, in den Bereichen großer Scherererwärmung dem Walzwerk örtlich kaltes Neumaterial oder Pulver zuzuführen, welches von halbplastischem Material umschlossen, sehr schnell schonend aufgeschlossen wird und gleichzeitig die überschüssige Scherwärme nutzbringend für die Plastifizierung von Neumaterial umsetzt. Hierin liegt eine der Ursachen für den ungewöhnlich niedrigen Gesamtenergieverbrauch je kg plastifizierten Materials und der Grund für den überaus großen Betriebsbereich des erfindungsgemäßen Walzwerkes über große Viskositätsbereiche der verschiedensten Materialien.

Die weitere Bedingung für die Lösung der erfindungsgemäßen Aufgabe der zweiachsigen Scherung erfordert den kontrollierten Materialfluß in axialer Richtung, um ein sehr kurzes und gleichmäßiges Verweilzeitspektrum des plastischen Materials in sich und gegen die örtliche Walzenoberfläche zu erhalten.

Dieser zweite Teil der erfindungsgemäßen Aufgabe wird in Verbindung mit der oben beschriebenen Nutzung der Walzenoberflächen dadurch gelöst, daß die Nuten in den gegenläufigen Walzenoberflächen mit einer gegenläufigen Steigung im Winkel von 1—45 Grad zur Walzenachse, vorzugsweise von 5—35 Winkelgrad eingebracht werden. Der günstige Steigungswinkel für die Nuten hängt vom Walzendurchmesser, vom Walzenspalt, von dem Abstand der Nuten untereinander und dem Unterschied der Oberflächengeschwindigkeit der beiden Walzen ab. Bei kleineren Walzendurchmessern von 100—200 mm bringt ein Nutabstand von 10 bis 50 mm und ein Steigungswinkel von 7—30 Grad gute Ergebnisse für den axialen Materialtransport und die axiale Scherkomponente. Bei Walzendurchmessern von 400 bis 650 mm wurde mit Steigungswinkeln von 5 bis 25 Grad und Nutsabständen von 6—25 mm erfolgreich gearbeitet.

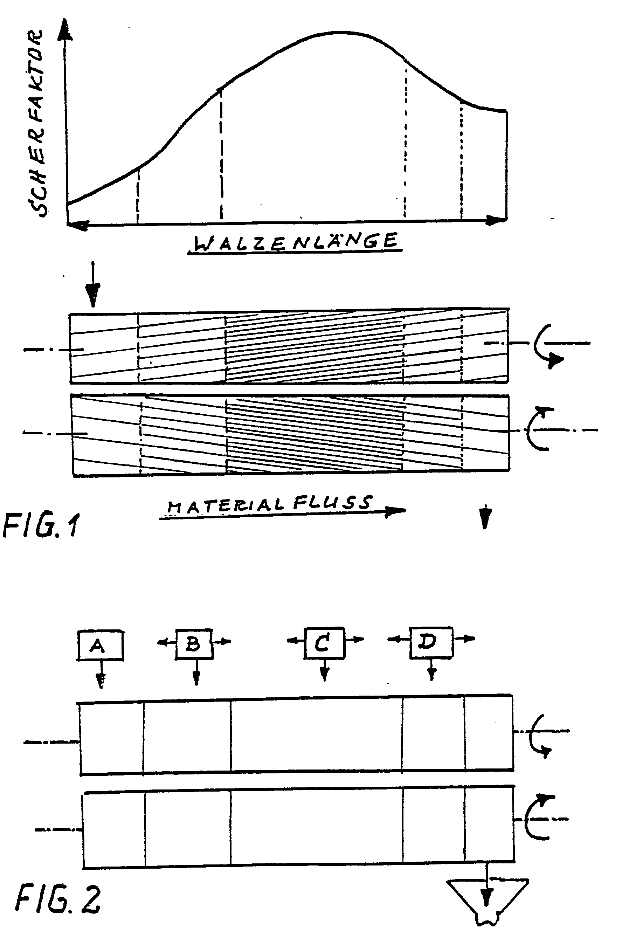

Es erweist sich erfindungsgemäß als vorteilhaft, in Anpassung an das zu plastifizierende Material die Zahl der Nuten (Nutabstände) und deren Tiefe über die Walzenlänge in axialer Richtung dem Materialfluß und dem Viskositätzustand entsprechend abzustimmen, (s. Fig. 1). Im Beispiel beginnt man auf der Zuführseite des Walzwerkes mit einer bestimmten Anzahl von Nuten einer bestimmten Nuttiefe, welche eine relativ lange Verzweilzeit des kalten Materials bewirkt. Im Bereich der Gummielastizität des Mischgutes steigert man über eine größere Nutentiefe und die doppelte, — und weiter zu Mitte des Knetspaltes hin-, vierfache Nutenzahl die großvolumige Misch- und Entgasungswirkung und vermeidet dadurch Scherverbrennungen.

Im letzten Abschnitt vor der Materialabnahme verbessert man den Feinauchschluß bei dem nunmehr teilplastischen Material gezeilt und kontrolliert durch weniger und flacher ausgeführte Nuten.

Die Walzen sin in der Regel innen heiz- und kühlbar ausgerüstet. Die Justage des Walzwerkes für den Plastifizierungsprozeß beginnt mit der Temperatureinstellung der beiden Walzen, mit der Wahl des Walzenspaltes und dann mit der Friktionseinstellung der beiden Walzen zueinander durch Festlegung de verschiedenen Oberflächengeschwindigkeiten.

Da das Material von der Aufgabeseits kommend kontinuierlich transportiert und dabei plastifiziert wird, ermöglicht die örtliche Wahl der Abnahmestelle entlang der Walzenachse auch die Entnahme eines kontrolliert teilplastizierten Materialstreifens. Die Plastifiziervorrichtung ist von außen frei zugänglich; deshalb ist es erfindungsgemäß vorteilhaft, an einer bestimmten Stelle der Längsachse Neumaterial zuzuführen, welches in dem Verfahren nur kontrolliert-teilplastifiziert werden dart. Schlagzähmodifikatoren, Füllstoffe, Farbstoffe, Vernetzungskomponenten, Schäum- bzw. Porosierungsmittel oder auch Vestärkungsfasern führt man erst an einer bestimmten axialen Stelle in einem definierten Plastifizierungsgrad des Hauptmaterials zu oder wähit eine definierte Verweildauer durch Zugabe an einer bestimmten Stelle des Walzenspaltes. Hierfür benutzt man in axialer Richtung einstellbare Aufgabevorrichtungen, (s. Fig. 2).

Aus Messungen an Versuchswalzwerken der erfindungsgemäßen Gattung ergab sich, daß vergleichsweise niedrige Spaltdrücke von 30—40% der Werte des üblichen Walzwerkes konstruktiv eine wesentlich Verlängerung der Walzen zulassen. Die doppelte bis dreifache Walzenlänge des bisher bei Walzwerken üblichen, verursacht deshalb auch noch keine konstruktiven Probleme. Dadurch eröffnen sich auch die vorstehend beschriebenen gezielten Eingriffsmöglichkeiten von außen in den verfahrenstechnischen Ablauf. Es soll erwähnt werden, daß mit einer einfachen Kapselung das gesamte Plastifiziergerät in einer inerten Gasatmosphäre untergebracht werden kann.

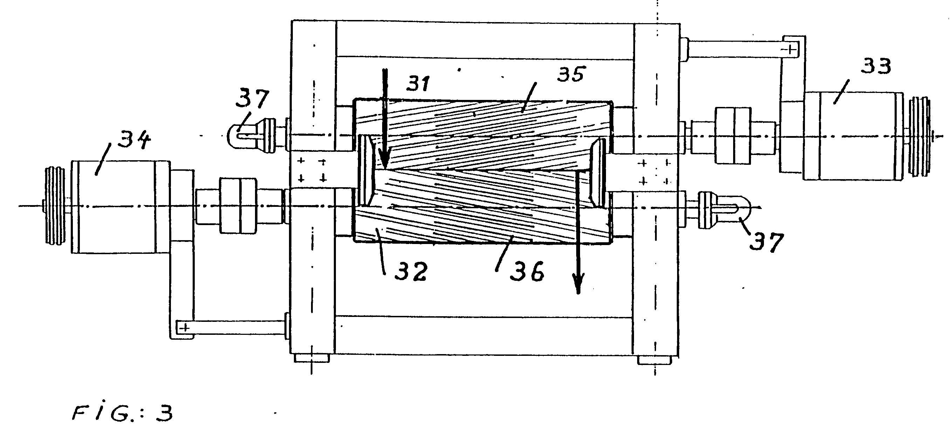

Es bedarf keiner besonderen Erläuterung, daß die bekannten Vorteile des Walzwerkes, Preiswürdigkeit, Betriebsicherheit, Robustheit, keine teuren Verschließschäden, leichte Reinigung beim Farbwechsel und universelle Einsetzbarkeit auch für die erfindungsgemäße Ausführung uneingeschränkt bestehen bleiben. Ein Ausführungsbeispiel des erfindungsgemäßen, kontinuierlichen Misch- und Scherwalzwerkes mit 150 mm Walzendurchmesser und einer Ballenlänge der Walzen von 750 mm wird in Figur 3 schematisch gezeigt. Die Walze (31) wird über den Motor (33), die Walze (32) über den Motor (34) mit jeweils unabhängig einstellbarer Drehzahl im Bereich von 5—50 Umdrehungen je Minute gegenläufig angetriekben. An der Oberfläche sind die Walzen in Art einer Schrägverzahnung mit einer gegenläufigen Nutprofilierung (35) bzw. (36) versehen, welche 10 Winkelgrad zur Achse geneigt ist. Die Nuttiefe beginnt an der Aufgabeseite im ersten Abschnitt mit 0.75 mm, wächst in Richtung Walzenmitte auf 2,5 mm Tiefe und läuft im letzten Abschnitt auf der Abnahmeseite des Materials mit 0.5 mm Tiefe aus. Die Nutbreite ist nur aus Fertigungsgründen mit 3 mm konstant belassen worden. In der Walzenmitte sind auf einer Länge von 50% des Ballens die Abstände von Nut zu Nut am kleinsten, im Beispiel 10 mm auf einer Ballenlänge von zweimal 150 mm beidseitig von der Walzenmitte aus gemessen. Dort sind 36 Nuten über den Umfang verteilt. In Richtung auf die Materialaufgabeseite ebenso wie zur Materialabnahmeseite folgen jeweils 125 mm Ballenlänge mit 18 Nuten über den Umfang verteilt und mit 26 mm Abstand von Nut zu Nut. Auf einer Ballenlänge von 100 mm an den beiden Walzenenden sind nur noch 9 Nuten über den Umfang verteilt, wobei sich Nutabstände von 52 mm ergeben. Die verfahrensbedingt große Zahl von Nuten in der Walzenmitte reduziert den Spaltdruck in der Walzenmitte soweit, daß statt der gewählten Walzenballenlänge von 750 mm bei vielen Materialen eine Ballenlänge von 1500 mm bei 150 mm Durchmesser realisierbar ist.

Für die Plastifizierung von Hart-PVC wurde die Vorderalze auf 180°C, die hintere Walze auf 160°C über die Drehdurchführungen 37 mit Flüssigkeit innen temperiert.

Beispielsweise wird für das Betreiben des erfindungsgemäßen Walzwerkes zunächst als Material A ein acetalhaltiges PVC Copolymer in Pulverform aufgegeben. Es schmilzt verhältnismäßig leicht, Material B ist ein hochmolekulares PVC-Pulver; Material C ist ein Füllstoff mit Farbe; Material D eine Schlagzähkomponente oder auch Glasfaserschnitzel. Die einzelnen Komponenten werden mit Hilfe von Dosiergeräten an axial verschiedenen Stellen des Walzenspaltes zugeführt, (s. Fig. 2) Die Abnahme des homogenisierten Materials erfolgt über Abnahmeschaber. Sobald das Material soweit wie gewünscht plastifiziert ist, fällt es in die Aufgabevorrichtung einer Formgebungsmaschine; im Regelfall ist das ein Verformungsextruder, eine Spritzgußmaschine oder ein Folienkalander.

Diese als Beispiels beschriebene Ausführung eines erfindungsgemäßen Walzwerkes eignet sich für das Plastifizieren von Hart-PVC und ergibt eine Leistungssteigerung auf das Doppelte bis Dreifache des üblichen Walzwerkes. Ein großer Vorteil ist darin zu erblicken, daß die einzeinen Komponenten gezielt nacheinander dem Plastifizierspalt zugeführt werden können. Auf diese Weise enstehen Materialzusammensetzungen, die zur Verbesserung der Endeigenschaften zum Beispiel eine kontrollierte inhomogenität im Feingefüge des Materials aufweisen. Bei Schlagzähkomponenten wird die gefürchtete völlige Scherzersetzung zuverlässig verhindert. Pulverförmige Kautschukzusammensetzungen werden in einem Durchlauf homogenisiert und mastifiziert.

Erfindungsgemäßen werden vorzugsweise gegenläufig rotierende Walzen mit Nutprofilen gegenläufiger Steigung ausgerüstet, zum Beispiel die Vorderwalze rechtsgängig, die Hinterwalze linksgängig. Die jeweils geeignete Ausführung des Nutprofils hängt von den Eigenschaften des zu mischenden und oder zu plastifizierenden Materials ab. Es liegt jedoch auch im Bereich der Erfindung, Walzen mit gleichlaufendem Nutprofil und gleichlaufender Drehrichtung, aber unterschiedlicher Oberflächengeswindigkeit zu betreiben.

## Patentansprüche

1. Misch- und Scherwalzwerk für plastifizierbares Material mit zwei, mit unterschiedlicher Umfangsgeschwindigkeit laufenen, temperierten Walzen (31), (32), auf denen schräg zu den Walzenachsen scharfkantige Nuten (35), (36) gegenläufig angeordnet sind, mit axial zu den Walzen (31), (32) verstellbaren Materialaufgabe- und abnahmevorrichtungen, dadurch gekennzeichnet, daß beide Walzen (31), (32) unterschiedlich temperiert sind, daß die Walzenlänge mehr als das Vierfache des Walzendurchmessers beträgt, daß die Nuten (35), (36) in einem spitzen Winkel kleiner als 45° zu den Walzenaschen angeordnet sind, daß die zahl der Nuten auf dem Walzen umfang und die Tiefe der Nuten entlang den Walzenachsen von der Lagerseite mit der Materialaufgabe bis zur Walzenmitte zunimmt und von dort bis zur Lagerseite mit der Materialabnahme wieder abnimmt und daß mehrere Materialaufgabevorrichtungen für verschiedene Materialtypen und Zugabestoffe in axialer Richtung entlang dem Walzenspalt angeordnet sind.

2. Misch- und Scherwalzwerk nach Anspruch 1, dadurch gekennzeichnet, daß die schräg zu den Walzenachsen verlaufenden Nuten (35), (36) je nach gewünschter Axialschubbewegung des Materials im Walzenspalt im Winkel von 5—45 Winkelgraden gegenläufig angeordnet sind.

3. Misch- und Scherwalzwerk nach Anspruch 1 bis 3, dadurch gekennzeichnet, daß die Nuten (35), (36) zur Walzenoberfläche scharfkantig zum Nutgrund halbrund oder rechteckig mit abgerundeten Ecken ausgebildet sind.

4. Misch- und Scherwalzwerk nach Ansprüchen 1 bis 3, dadurch gekennzeichnet, daß auf der Aufgabenseite die Nuten (35), (36) 0,5 bis 10 mm tief, 1 bis 50 mm breit und im Abstand von 5 bis 100 mm angeordnet sind und bis zur Abnahmeseite durchlaufen.

5. Misch- und Scherwalzwerk nach Ansprüchen 1 bis 4, dadurch gekennzeichnet, daß über die Walzenlänge, auf mindestens zwei Ballenabschnitten, Nuten (35), (36) in zueinander unterschiedlicher Anzahl über den Walzenumfang verteilt angeordnet sind.

6. Misch- und Scherwalzwerk nach Ansprüchen 1 bis 6, dadurch gekennzeichnet, daß den einzelnen Nutenabschnitten Materialaufgabevorrichtungen für die Materialien (A), (B), (C) und (D) zugeordnet sind.

7. Misch- und Scherwalzwerk nach Anspruchen 1 bis 7, dadurch gekennzeichnet, daß jeder Walze (31), (32) mit einem eigenen Motor (33), (34), mit jeweils unabhängig einstellbarer Drehzahl im Bereich von 5—50 Umdrehungen je Minute, versehen ist.

## Revendications

1. Broyeur-malaxeur à cylindres pour matières plastifiables comportant deux cylindres (31, 32) chauffés, tournant à des vitesse périphériques différentes, sur lesquels sont disposés, obliquement aux axes des cylindres, des rainures (35, 36) à arêtes vives orientées dans des directions opposées comportant des dispositifs d'entrée et de sortie de la matière, caractérisé par le fait que les deux cylindres (31, 32) sont maintenus à des températures differentes, que la longueur des cylindres est supérieure au quadruple de leur diamètre, que les rainures (35, 36) sont disposées à angle aigu inférieur à 45° par rapport aux axes des cylindres, que le nombre des rainures sur le portour des cylindres et la profondeur desdites rainures augmente à partir du côté comportant l'entrée de la matière jusqu'au milieu du cylindre et diminue à partir de ce milieu jusqu'au côté comportant la sortie de la matière, et par le fait que plusieurs dispositifs d'entrée et de sortie de matière sont disposés le long de l'emprise en direction axiale en prévision de différents types de matières et d'additifs.

2. Broyeur-malaxeur à cylindres selon la revendication 1, caractérisé par le fait que les rainures (35, 36) s'étendant obliquement aux axes des cylindres sont disposés en des directions opposées formant un angle de 5 à 45° selon le mouvement de poussée axiale souhaité de la matière dans l'emprise.

3. Broyeur-malaxeur à cylindres selon les revendications 1 et 2, caractérisé par le fait que les rainures (35, 36) sont réalisées à arêtes vives en direction de la surface des cylindres, et présentent un fond semi-circulaire ou rectangulaire à coins arrondis.

4. Broyeur-malaxeur à cylindres selon les revendications 1 à 3, caractérisé par le fait que sur le côté d'entrée, les rainures (35, 36) ont une profondeur de 0,5 à 10 mm, une largeur de 1 à 50 mm et sont disposées à des distances de 5 à 100 mm et se continuent jusqu'a côté de la sortie.

5. Broyeur-malaxeur à cylindres selon les revendications 1 à 4, caractérisé par le fait que sur la longueur des cylindres sur au moins deux sections, des rainures (35, 36) sont disposées sur le pourtour des cylindres en nombres différents les uns des autres.

6. Broyeur-malaxeur à cylindres selon les revendications 1 à 5, caractérisé par le fait qu'aux diverses sections de rainures sont associés des dispositifs d'entrée pour les différentes matières (A, B, C et D).

7. Broyeur-malaxeur à cylindres selon les revendications 1 à 6, caractérisé par le fait que chaque cylindre (31, 32) est muni de son propre moteur (33, 34) dont les vitesses de rotation sont réglables indépendamment les unes des autres entre 5 et 50 tours par minute.

**Claims**

1. Mixing, shearing and rolling mill for plasticisable material, comprising two tempered rolls (31), (32) running at different peripheral speeds and on which there are disposed oppositely directed sharply edged grooves (35), (36) extending obliquely to the roll axes, and comprising material feeding and removal means which are adjustable axially with respect to the rolls (31), (32), characterized in that the two rolls (31), (32) are temperature-controllable to different extents, the roll length amounting to more than four times the roll diameter, that the grooves (35), (36) are at an acute angle of less than 45° to the roll axes, that the number of grooves over the roll periphery and the depth of the grooves increases along the roll axis from the bearing side on which the material is fed and as far as the roll centre, after which it diminishes again towards the bearing side on which the material is removed and that a plurality of material feed means for different types of materials and additives are arranged in an axial direction along the roll gap.

2. Mixing, shearing and rolling mill according to Claim 1, characterised in that the grooves (35), (36) which extend obliquely to the roll axes are, according to the desired axial thrust movement of the material in the roll gap, disposed in an opposing arrangement, at an angle of 5 to 45 degrees.

3. Mixing, shearing and rolling mill according to Claim 1 and 2, characterised in that the grooves (35), (36) are constructed with sharp edges towards the roll surface, the groove bottom being half-round, or rectangular with rounded corners.

4. Mixing, shearing and rolling mill according to Claims 1 to 3, characterised in that on the feed side, the grooves (35), (36) are 0.5 to 10 mm deep, 1 to 50 mm wide and are disposed at intervals of 5 to 100 mm and extend as far as the removal side.

5. Mixing, shearing and rolling mill according to one of Claims 1 to 4, characterised in that along the roll length, on at least two face sections, grooves (35), (36) are distributed over the periphery of the roll in different numbers.

6. Mixing, shearing and rolling mill according to Claims 1 to 5, characterised in that the individual grooved sections are assigned material feed devices for the materials (A), (B), (C) and (D).

7. Mixing, shearing and rolling mill according to Claims 1 to 6, characterised in that each roll (31), (32), is equipped with its own motor (33), (34), with a respective, independently adjustable rotation speed in the range of 5—50 rotations per minute.

SCHERFAKTOR

WALZENLÄNGE

MATERIAL FLUSS

FIG.1

A    B    C    D

FIG.2

1

FIG: 3